# EUROPÄISCHE PATENTSCHRIFT

(11) **EP 1 177 975 B1**
(45) Veröffentlichungstag und Bekanntmachung des Hinweises auf die Patenterteilung: **23.02.2005**
(21) Anmeldenummer: 01118334.0
(22) Anmeldetag: 27.07.2001
(51) Int. Cl.: B64C 1/14

(54) **Steuerung für eine Passagiertür eines Flugzeuges**
Aircraft door control sytem
Commande pour porte d'aéronef

(30) Priorität: 02.08.2000 DE 10037621
(43) Veröffentlichungstag der Anmeldung: 06.02.2002
(73) Patentinhaber: Eurocopter Deutschland GmbH, 86609 Donauwörth (DE)
(72) Erfinder: Erben, Hannes, 86609 Donauwörth (DE); Laurent, Pascal, 80469 München (DE)
(74) Vertreter: Baum, Wolfgang, Dipl.-Ing.

(56) Entgegenhaltungen:
- US-A- 4 497 462
- US-A- 5 251 851

## Beschreibung

Die Erfindung betrifft eine Passagiertür eines Flugzeuges, die mittels eines Tragarms beweglich an einem Rumpf des Flugzeugs angeordnet ist und eine Hub- und Schwenkeinrichtung aufweist, welche die Passagiertür zwischen einer Öffnungslage und einer Schließlage führt, und eine Verriegelungseinrichtung, mit der die Passagiertür in einer Verriegelungslage verriegelbar ist und eine Türsteuerung mit Stellgliedern, Sensoren und Steuermitteln zum Steuern der Reihen folge einer Vielzahl von Türfunktionen zum Öffnen oder Schließen der Passagiertür.

Nach der DE 197 02 084 C1 wird eine Passagiertür eines Flugzeuges während des Schließvorganges am Ende der Einschwenkbewegung auf einer im wesentlichen konform zur Flugzeugaußenkontur gekrümmten Hubbewegungsbahn geführt. Die Hubbewegungsbahn ist im wesentlichen quer zur Schwenkrichtung der Passagiertür geführt.
Am Ende der Bahn einer Einschwenkbewegung und mit Beginn der Hubbewegungsbahn wird die Passagiertür mittels einer Hubeinrichtung abgesenkt und in eine Schließlage geführt. Die Schließlage entspricht einem formschlüssigen Eingriff der türseitig festen Anschlagelemente mit den türrahmenfesten Auflageelementen. In der Schließlage wird die Passagiertür mittels einer Verriegelungseinrichtung verriegelt, d.h. in einer Verriegelungslage gehalten. Die Verriegelungseinrichtung für eine Passagiertür arbeitet dabei unabhängig von einer Hub- und Schwenkeinrichtung der Passagiertür. Die Verriegelungseinrichtung der Passagiertür hat im konstruktiv einfachsten Falle einen von einer Antriebswelle in eine Arretierposition bewegbaren Anschlag ausgebildet. Die Verriegelung wird dabei beispielsweise von einer drehbaren Antriebswelle aktiviert bzw. deaktiviert.

Die EP 465 785 A1 offenbart den gedanklichen Vorschlag, für Bedienungsmaßnahmen einer Passagiertür elektromotorische Einzelantriebe vorzusehen.
Die elektromotorische Bewegung wird durch bekannte Maßnahmen der rechnergesteuerten Automation erreicht. Bekannt ist der Einbau von programmgesteuerten Elektromotoren. Der Fachmann weiß, daß dies einen Leitrechner mit entsprechenden Rechenprogramme erfordert. Das ist eine aufwendige und nicht unbedingt erforderliche Lösung.

Aus der US-P-4 497 462 ist eine Frachttür eines Flugzeugs bekannt, mit: einer Tragarme aufweisenden Gelenk- oder Scharniereinrichtung, mit der die Frachttür beweglich an einem Rumpf des Flugzeugs anzuordnen ist; einer durch die Gelenkeinrichtung gebildeten Schwenkeinrichtung, welche die Frachttür zwischen einer Öffnungslage und einer Schließlage führt; einer Verriegelungseinrichtung, mit der die Frachttür in einer Verriegelungslage verriegelbar ist; und einer Türsteuerung. Die Türsteuerung besitzt eine Steuerkonsole, die als zentrale Kontroll- bzw. Steuereinrichtung fungiert und alle Steuerungen zum Betätigen der Frachttür enthält. Diese zentrale Steuereinrichtung ist mit Stellgliedern, Sensoren und Steuermitteln zum Steuern der Reihenfolge einer Vielzahl von Türfunktionen zum Öffnen oder einer Vielzahl von Türfunktionen zum Schließen der Frachttür ausgestattet. Einige Sensoren dieser zentralen Steuereinrichtung detektieren die Position der Tür und kontrollieren in Antwort auf die detektierte Position die Zufuhr ,von Energie zu bestimmten Türbetätigungselementen, synchronisieren die Zufuhr von Energie bzw. führen Energie in einer geeigneten Abfolge zu oder schalten Energie ab, um die Tür zu betätigen, oder, um die Energie zu einem bestimmten Steuermittel abzuschalten und dafür die Energie zu einem anderen Steuermittel zuzuschalten. Die Frachttür-Steuerung der US-P-4 497 462 ähnelt von ihrem Konzept her damit einer Türsteuerung, die einen zentralen Leitrechner verwendet.

Aufgabe der Erfindung ist es, eine Passagiertür eines Flugzeuges mit einer Schwenk- und Hubeinrichtung und einer einfachen und äußerst kostengünstigen Türsteuerung zu schaffen, die dennoch den Sicherheitsanforderungen entspricht.

Die Aufgabe wird gelöst durch eine erfindungsgemäße Passagiertür mit Merkmalen des Anspruch 1. Die Passagiertür wird von einer Türsteuerung gesteuert. Diese Steuerung ist eine Ablaufsteuerung, die die Türfunktionen der Passagiertür steuert. Bei dieser Ablaufsteuerung steuert ein einer jeweiligen Türfunktion zugeordneter Sensor die Weiterschaltung zur jeweils nachsten Türfunktion. Es handelt sich um zwangsläufig schrittweise geführte Funktionsabläufe, wobei jeweils ein Sensor einer entsprechenden Türfunktion zugeordnet ist. Dieser Sensor erkennt den Anfang und/oder das Ende einer Türfunktion und veranlasst den Sensor einer anderen Türfunktion. Es ist jeweils nur der Sensor der laufenden Türfunktion aktiv.
Nach einer Ausgestaltung kann der Sensor in Abhängigkeit eines zurückgelegten Weges oder bestimmter Winkelpositionen der Passagiertür oder eines Bauelements der Hub- und Schwenkeinrichtung eine Weiterschaltung auslösen.

Die Ablaufsteuerung benötigt im wesentlichen Sensoren, die eine Weiterschaltung zur nächsten Türfunktion überwachen und veranlassen. Damit entsteht ein äußerst geringer apparativer Aufwand. Damit bleibt die Steuerung sehr robust und wenig störanfällig. Insgesamt ist diese Lösung äußerst kostengünstig gegenüber einer rechnergesteuerten Lösung

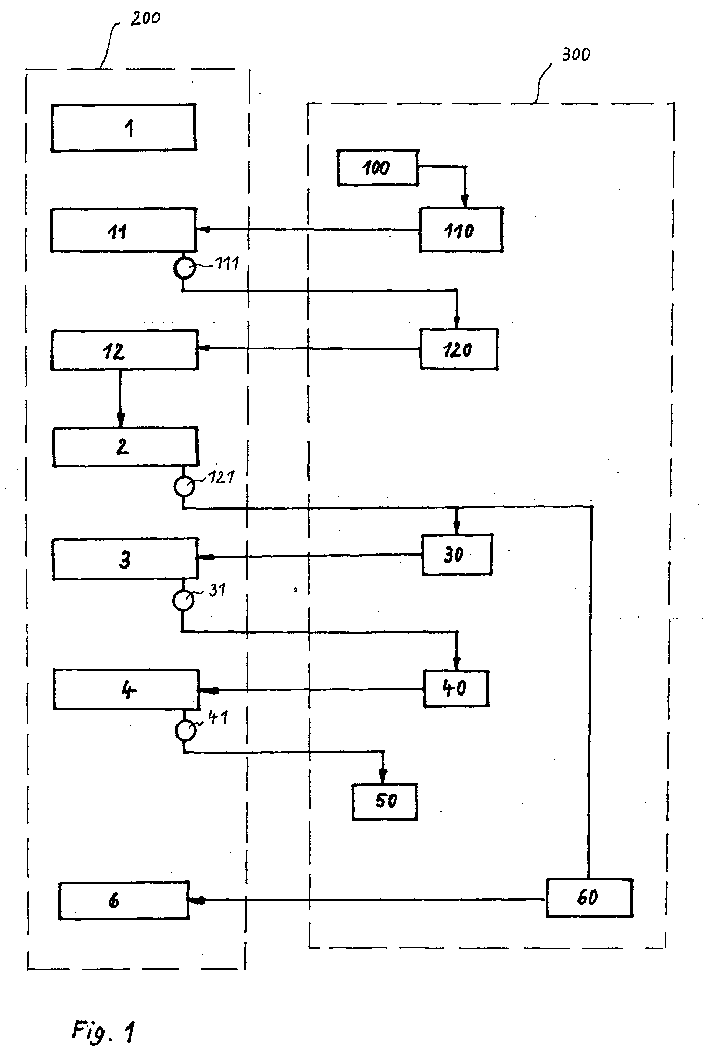

Nachfolgend wird die Erfindung anhand eines Ausführungsbeispieles und einer Figur erläutert. Dabei zeigt
- **Figur 1**: die Ablaufsteuerung einer erfindungsgemäßen Passagiertür im Zusammenhang mit Türfunktionen zum Öffnen oder Schließen der Passagiertür.

Eine Passagiertür ist bekannterweise eine Konstruktion wie sie in DE 197 02 084 C 1 beschrieben ist. **Fig. 1** zeigt Ablaufschritte (Türfunktionen) wie Sie sich für einen Schließvorgang einer Passagiertür eines Flugzeuges ergeben. Diese Ablaufschritte in ungekehrter Reihenfolge sind charakteristisch für einen Öffnungsvorgang der Tür.

Der Schließvorgang wird ausgelöst durch Schwenken der Tür, beispielsweise per Hand aus der Endposition einer Öffnungslage 1. Das entspricht einer Startposition 100. Beim Schließvorgang wird die Tür aus der Öffnungslage 1 mittels einer Schwenkeirtrichtung 110 bis ans Ende einer Schwenkbewegung 11 geführt. Alternativ kann dies aber auch durch Knopfdruck ausgelöst werden, so daß ein Elektromotor die Passagiertür schwenkt. Das Ende der Einschwenkbewegung fühlt ein Sensor 111. Er ist beispielsweise am Ende der Einschwenkbahn angeordnet. Wird er von der Passagiertür berührt, bildet er ein Signal,welches eine Hubeinrichtung 120 startet. Es folgt dann eine Hubbewegung 12 (entspricht einem Absenken) mittels der Hubeinrichtung 120 entlang einer Hubbewegungsbahn, die im wesentlichen quer zur Schwenkrichtung geführt ist. Die Passagiertür wird in eine Schließlage 2 abgesenkt. Das Ende der Hubbewegung 12 entspricht der erreichten Schließlage 2. Ein Sensor 121 fühlt das Ende der Hubbewegung 12 und fühlt damit zugleich das Erreichen der Schließlage 2. Das kann ein mechanisch wirkender Sensor sein, beispielsweise ein beweglicher Stift, der mit Erreichen der Schließlage 2 gegen einen Elektrokontakt gedrückt wird, so daß ein Stromkreis geöffnet oder geschlossen wird, um so ein Startsignal für eine Verriegelungseinrichtung 30 zu geben. Schwenkeinrichtung 110 und Hubeinrichtung 120 bilden in der Regel eine gemeinsame Einrichtung was aber nicht Bedingung ist. Die Schwenk- und Hubeinrichtung 110, 120 hat mechanische oder elektromechanisch wirkende Baugruppen, wobei die von einem Tragarm getragene Tür in die Schließlage 2 geführt wird.

In der Schließlage 2 ist die Türöffnung geschlossen. Es beginnt ein Verriegeln der Tür mittels der Verriegelungseinrichtung 30. Beim Verriegeln wird die Passagiertür in ihrer Schließlage 2 gegenüber einem Rumpf des Flugzeugs verriegelt. Dazu greifen türseitige Verriegelungsmittel, wie zum Beispiel Haken, hinter rahmenseitige Anschlagmittel und arretieren die Passagiertür. Die Verriegelungslage 3 wird von einem Sensor 31 gefühlt. Er bildet ein Signal und startet eine Sicherungseinrichtung 40. Beispielsweise, indem eine Arretierung aus einer Antriebswelle für die Sicherungseinrichtung 40 freigegeben wird, so daß die Antriebswelle eine weitere Drehung und damit Positionierung von Sicherungsmitteln ermöglicht. Die Sicherungsmittel der Sicherungseinrichtung 40 sichern die Verriegelungslage 4. Damit wird ein unbeabsichtigtes Öffnen der Passagiertür beim Versagen der Verriegelungseinrichtung 30 vermieden. Die Sicherungseinrichtung 40 kann mit der Verriegelungseinrichtung 30 zu einer Einrichtung kombiniert sein. Diese kann ebenfalls mechanisch oder elektromechanisch wirkend ausgeführt sein. Es besteht kein Anspruch, die technischen Mechanismen der einzelnen Einrichtungen strikt separat auszuführen und anzuordnen.

Eine Türsteuerung zum Schließen oder Öffnen der Passgiertür muß diese Funktionen in einer festgelegten Folge von Türfunktionen (Arbeitsschritten) 200 umsetzen und abarbeiten. Der Anfangs- oder Endzustand einer jeweiligen Türfunktion muß durch einen Sensor 111, 121, 31, 41 sicher erkannt und gemeldet werden. Dabei finden Sensoren Verwendung, die in Abhängigkeit von zurückgelegten Wegen oder bestimmten Positionen, die Türfunktionen einleiten oder beenden. Die Sensoren liefern dabei ein Signal, welches gegenüber der Einrichtung 110, 120, 30, 40 die Türfunktion einleitet oder beendet. Im einfachsten Fall kann dies erfolgen, wenn ein von der Passagiertür mitgeführter Stift beispielsweise auf einen beweglichen Anschlag trifft, der infolge einer Lageänderung die Kraftübertragung für ein Stellglied einer Einrichtung freigibt, die eine nachfolgende Türfunktion realisiert. Die Weiterschaltung von einer Türfunktion zur nächsten Türfunktion erfolgt, wenn eine definierte zeit- oder prozeßgeführte Weiterschaltbedingung erfüllt ist. Einer solchen Weiterschaltbedingung entspricht ein vom Sensor 111, 121, 31, 41 gemeldetes Signal. Dazu wird kein Rechner mit Rechenprogrammen oder der Aufbau einer Rechnerhierarchie benötig. Damit kann die Türsteuerung einfach, robust und weniger störanfällig gestaltet werden. Es handelt sich bei der Steuerung für die Einrichtungen der Passagiertür um eine sensorgeführte Ablaufsteuerung 300. Die Ablaufsteuerung 300 repräsentiert eine Ablaufkette von Festgelegten, aufeinander Folgenden, sensorgeführten, zwangsläufigen Tür-Steuerungsschritten 200. Die Einrichtungen 110, 120, 30 und 40 können hierbei beispielsweise als Stellmittel elektromotorische Antriebe besitzen, welche mittels mechanischer Kraftübertragungsmittel die Bewegung veranlassen bzw. mechanische Elemente in eine Verriegelungslage 3 oder gesicherte Verriegelungslage 4 führen. Sollten keine elektromotorischen Stellmittel zum Einsatz kommen, so ist bei einer mechanischen Lösung die Verriegelungslage 3 und die gesicherte Verriegelungslage 4 durch mechanische Betätigung eines Handhebels aus einer Startposition 100 bis in eine Endposition 50 möglich.

Ein weiterer, zusätzlicher Schritt beim Schließvorgang ist das Aktivieren einer Notrutsche 6 durch Betätigung einer Notrutscheinrichtung 60. Dies ist eine von der Verriegelungslage 4 unabhängige Türfunktion, die mit Erkennen der Schließlage 2 mittels Sensor 121 gestartet wird. Die vom Sensor 121 aktivierte Notrutscheinrichtung 60 bringt die Notrutsche 6 in eine aktive Funktion.

## Patentansprüche

1. Passagiertür eines Flugzeugs, mit
- einem Tragarm, mit dem die Passagiertür beweglich an einem Rumpf des Flugzeugs anzuordnen ist;
- einer Hub- und Schwenkeinrichtung (110, 120), welche die Passagiertür zwischen einer Öffnungslage und einer Schließlage führt;
- einer Verriegelungseinrichtung (30), mit der die Passagiertür in einer Verriegelungslage (2, 3, 4) verriegelbar ist;
- einer Türsteuerung mit Stellgliedern, Sensoren (31, 41, 111, 121) und Steuermitteln zum Steuern der Reihenfolge einer Vielzahl von Türfunktionen zum Öffnen oder einer Vielzahl von Türfunktionen zum Schließen der Passagiertür;
wobei
- die Türsteuerung eine sensorgeführte Ablaufsteuerung (300) in Form einer Ablaufkette von festgelegten, aufeinanderfolgenden, sensorgeführten, zwangsläufigen Tür-Steuerungsschritten (200) ist, bei der
einer jeweiligen Türfunktion jeweils ein Sensor (31, 41, 111, 121) als Steuerungsmittel zugeordnet ist und
innerhalb der Ablaufkette immer nur der Sensor der jeweils laufenden Türfunktion aktiv ist und eine Weiterschaltung zur jeweils nächsten Türfunktion überwacht und steuert.

2. Passagiertür nach Anspruch 1,
**dadurch gekennzeichnet, dass**
ein Sensor (111, 121, 31, 41) in Abhängigkeit eines zurückgelegten Weges oder von Winkelpositionen der Passagiertür oder eines Bauelements der Hub- und Schwenkeinrichtung (110, 120) die Weiterschaltung auslöst.

3. Passagiertür nach Anspruch 1,
**dadurch gekennzeichnet, dass**
die Ablaufkette der sensorgeführten Ablaufsteuerung (300) durch Schwenken der Passagiertür auslösbar (100) ist.

4. Passagiertür nach Anspruch 1,
**dadurch gekennzeichnet, dass**
die sensorgeführte Ablaufsteuerung (300) mit einer Notrutscheinrichtung (60) einer Notrutsche (6) gekoppelt ist und einer der Sensoren (121) der Ablaufsteuerung (300) bei einer Türfunktion zum Schließen der Passagiertür die Notrutscheinrichtung (60) aktiviert.

5. Passagiertür nach Anspruch 1,
**dadurch gekennzeichnet, dass**
die sensorgeführte Ablaufsteuerung (300) bei einem Öffnungsvorgang der Passagiertür die Ablaufkette von festgelegten, aufeinanderfolgenden, sensorgeführten, zwangsläufigen Tür-Steuerungsschritten (200) in umgekehrter Reihenfolge wie bei einem Schließvorgang durchläuft.

## Claims

1. Passenger door of an aircraft, having
- a supporting arm with which the passenger door can be movably arranged on the aircraft fuselage;
- a lifting and swivelling device (110, 120) which guides the passenger door between an open position and a closed position;
- a locking device (30) with which the passenger door can be locked in a locked position (2, 3, 4);
- a door control with actuators, sensors (31, 41, 111, 121) and control means for controlling the order of a plurality of door functions for opening the passenger door or a plurality of door functions for closing the passenger door;
wherein
- the door control is a sensor-guided sequence control (300) in the form of a sequence cascade of fixed, successive, sensor-guided, positively actuated door-control steps (200), in which a respective sensor (31, 41, 111, 121) as a control means is associated with a respective door function, and
within the sequence cascade always only the sensor of the door function that is running in each case is active and monitors and controls indexing to the next respective door function.

2. Passenger door according to claim 1,
**characterised in that** a sensor (111, 121, 31, 41) triggers the indexing as a function of a path that has been covered or of angular positions of the passenger door or a component of the lifting and swivelling device (110, 120).

3. Passenger door according to claim 1, **characterised in that** the sequence cascade of the sensor-guided sequence control (300) can be triggered (100) by swivelling the passenger door.

4. Passenger door according to claim 1, **characterised in that** the sensor-guided sequence control (300) is coupled to an evacuation slide device (60) of an evacuation slide (6), and one of the sensors (121) of the sequence control (300) activates the evacuation slide device (60) in the case of a door function for closing the passenger door.

5. Passenger door according to claim 1, **characterised in that** in the case of a process for opening the passenger door the sensor-guided sequence control (300) runs through the sequence cascade of fixed, successive, sensor-guided, positively actuated door-control steps (200) in reverse order to that in the case of a closing process.

## Revendications

1. Porte de passagers d'un avion comprenant
- un bras support, qui permet de disposer la porte de passagers de façon mobile sur un fuselage de l'avion;
- un dispositif de levage et de pivotement (110, 120), qui guide la porte de passagers entre une situation d'ouverture et une situation de fermeture;
- un dispositif de verrouillage (30), qui permet de verrouiller la porte de passagers dans une situation de verrouillage (2, 3, 4);
- une commande de porte comportant des organes de réglage, des capteurs (31, 41, 111, 121) et des moyens de commande pour commander la succession d'une multiplicité de fonctions de porte pour l'ouverture ou d'une multiplicité de fonctions de porte pour la fermeture de la porte de passagers;
dans laquelle
- la commande de porte est une commande séquentielle (300) conduite par des capteurs sous forme d'une chaîne de déroulement de phases de commande de porte (200) définies, successives, conduites par des capteurs et obligatoires, dans laquelle un capteur (31, 41, 111, 121) en tant que moyen de commande est associé à chaque fonction de porte et seul le capteur de la fonction de porte en cours à tout moment est actif à l'intérieur de la chaîne de déroulement et contrôle et commande un transfert à chaque fois à la fonction de porte suivante.

2. Porte de passagers suivant la revendication 1, **caractérisée en ce qu'**un capteur (111, 121, 31, 41) déclenche le transfert en fonction d'une trajectoire parcourue ou de positions angulaires de la porte de passagers ou d'un composant du dispositif de levage et de pivotement (110, 120).

3. Porte de passagers suivant la revendication 1, **caractérisée en ce que** la chaîne de déroulement de la commande séquentielle (300) conduite par des capteurs peut être déclenchée (100) par pivotement de la porte de passagers.

4. Porte de passagers suivant la revendication 1, **caractérisée en ce que** la commande séquentielle (300) conduite par des capteurs est couplée à un dispositif de toboggan (60) d'un toboggan (6) et l'un des capteurs (121) de la commande séquentielle (300) active le dispositif de toboggan (60) lors d'une fonction de porte pour la fermeture de la porte de passagers.

5. Porte de passagers suivant la revendication 1, **caractérisée en ce que** la commande séquentielle (300) conduite par des capteurs parcourt, lors d'une opération d'ouverture de la porte de passagers, la chaîne de déroulement de phases de commande de porte (200) définies, successives, conduites par des capteurs et obligatoires, dans l'ordre inverse de celui d'une opération de fermeture.
